# EUROPÄISCHE PATENTANMELDUNG

(11) **EP 3 162 689 A1**
(43) Veröffentlichungstag der Anmeldung: **03.05.2017**
(21) Anmeldenummer: 16196219.6
(22) Anmeldetag: 28.10.2016
(51) Int. Cl.: B62K 25/02, B62K 19/30

(54) **ANORDNUNG ZUR AUFNAHME EINER GESCHWINDIGKEITSMESSEINRICHTUNG AN EINEM FAHRRAD**

(30) Priorität: 31.10.2015 DE 202015007540 U
(71) Anmelder: Derby Cycle Werke GmbH, 49661 Cloppenburg (DE)
(72) Erfinder: Krauß, Holger, 73614 Schorndorf (DE)
(74) Vertreter: Jabbusch, Matthias

(57) **Zusammenfassung**

Bei einer Anordnung zur Aufnahme einer Geschwindigkeitsmesseinrichtung an einem Fahrrad, ist vorgesehen, dass zumindest ein Ausfallende (1) eines Rahmens des Fahrrades einen Bauraum (3) zur Aufnahme zumindest eines Geschwindigkeitssensors (2) aufweist und dass ein mit dem Geschwindigkeitssensor in auslösender Wirkung korrespondierendes Auslöseelement (5) an einem Bauteil des in das Ausfallende eingesetzten Rades angeordnet ist.

## Beschreibung

Die Erfindung betrifft eine Anordnung zur Aufnahme einer Geschwindigkeitsmesseinrichtung an einem Fahrrad.

Viele Benutzer von Fahrrädern interessieren sich für die während der Fahrt erreichte Fahrgeschwindigkeit. Daher werden regelmäßig Fahrradcomputer genannte Geschwindigkeitsmesseinrichtungen im Handel angeboten, welche nach Verbau an einem Fahrrad die Benutzer von Fahrrädern über die Momentan- und auch die Durchschnittsgeschwindigkeit informieren können.

Bekannte Geschwindigkeitsmesseinrichtungen weisen einen Geschwindigkeitssensor auf, der beispielsweise mit Kabelbindern an der Vorderradgabel befestigt wird. An einer Speiche des Vorderrades wird ein mit dem Geschwindigkeitssensor korrespondierendes Auslöseelement befestigt, dessen Vorbeiführen am Geschwindigkeitssensor während der Fahrt Impulse auslöst.

Bei den bekannten Geschwindigkeitsmesseinrichtungen treten durchaus Fehlfunktionen auf. Nicht immer stimmt die Zuordnung von Auslöseelement und Geschwindigkeitssensor, so dass die Benutzer von Fahrrädern von Zeit zu Zeit eine Korrektur der Anordnung des Auslöseelementes vornehmen. Hinzu kommt eine Schwierigkeit des Anbaus des Geschwindigkeitssensors, da trotz der Verwendung zugstarker Kabelbinder ein Verrutschen möglich ist.

Der Erfindung liegt die Aufgabe zugrunde, eine eingangs genannte Anordnung aufzuzeigen, mit der eine einfache Aufnahme der Bauteile der Geschwindigkeitsmesseinrichtung an einem Fahrrad ermöglicht ist.

Diese Aufgabe ist erfindungsgemäß dadurch gelöst, dass zumindest ein Ausfallende eines Rahmens des Fahrrades einen Bauraum zur Aufnahme zumindest eines Geschwindigkeitssensors aufweist und dass ein mit dem Geschwindigkeitssensor in auslösender Wirkung korrespondierendes Auslöseelement an einem Bauteil des in das Ausfallende eingesetzten Rades angeordnet ist.

Bei der erfindungsgemäßen Anordnung kann das Auslöseelement wie im Stand der Technik an einem Rad angeordnet sein. Das Rad, beispielsweise das Hinterrad des Fahrrades, wird in das Ausfallende eingesetzt und über dieses mit dem Rahmen des Fahrrades verbunden. Das somit ohnehin vorhandene Ausfallende wird erfindungsgemäß dazu genutzt, den Geschwindigkeitssensor einer Geschwindigkeitsmesseinrichtung aufzunehmen. Eine zusätzliche Anordnung mit Kabelbindern beispielsweise an einer Vorderradgabel ist nicht weiter erforderlich. Innerhalb des Ausfallendes kann der Geschwindigkeitssensor lagesicher und auch vor Umwelteinflüssen geschützt aufgenommen werden.

Nach einer Weiterbildung der Erfindung ist vorgesehen, dass der Geschwindigkeitssensor eine an den Bauraum des Ausfallendes angepasste Außenkontur hat. Der Geschwindigkeitssensor kann mit einem Gehäuse versehen sein, das durch geeignete Bearbeitung formbar ist. Die Außenkontur und somit die Außenform des Gehäuses kann dann an eine Innenkontur des im Ausfallende vorhandenen Bauraums angepasst sein, so dass sich der Geschwindigkeitssensor an das Ausfallende anschmiegen kann. Damit kann das Vorhandensein verbleibender Hohlräume im Ausfallende reduziert werden, so dass sich dort kein Schmutz ansammeln kann. Ein zum Geschwindigkeitssensor führendes Kabel kann dabei entlang einer Rahmenstrebe geführt werden, beispielsweise entlang einer Kettenstrebe. Auch eine Führung innerhalb einer Rahmenstrebe ist möglich.

Das Auslöseelement der Geschwindigkeitsmesseinrichtung kann wie im Stand der Technik an einer Speiche befestigt sein. Nach einer Weiterbildung wird es jedoch direkt auf der Radachse befestigt, wozu beispielsweise ein auf die Radachse aufgeschobener Ring dient, der einen Vorsprung hat, an dem das Auslöseelement angeordnet ist. Diese Bauform kann sehr raumsparend ausgeführt sein, ein nachträgliches Anschlagen von Bauelementen an Speichen ist nicht erforderlich.

Alternativ kann vorgesehen sein, dass das Auslöseelement an einer mit der Radachse drehfest verbundenden Bremsscheibe einer Scheibenbremse angeordnet ist. Die Bremsscheibe einer Scheibenbremse ist drehfest mit der Achse verbunden, so dass Drehungen der Achse auf die Bremsscheibe übertragen werden. Nicht sämtliche Abschnitte der Bremsscheibe sind zwischen den Bremsbacken der Scheibenbremse aufgenommen, es verbleiben abstützende Abschnitte. An diesen kann das Auslöseelement für den Geschwindigkeitssensor befestigt sein.

Ausführungsbeispiele der Erfindung, aus denen sich weitere erfinderische Merkmale ergeben, sind in der Zeichnung dargestellt. Es zeigen:
- Figur 1:: eine perspektivische Ansicht eines Ausfallendes eines Rahmens mit aufgenommenem Geschwindigkeitssensor sowie Auslöseelement;
- Figur 2:: eine weitere perspektivische Ansicht des Ausfallendes gemäß Figur 1;
- Figur 3:: eine perspektivische Ansicht einer ersten Aufnahmemöglichkeit für den Geschwindigkeitssensor; und
- Figur 4:: eine perspektivische Teilansicht einer Bremsscheibe einer Scheibenbremse mit einer weiteren Aufnahmemöglichkeit für das Auslöseelement gemäß Figur 1.

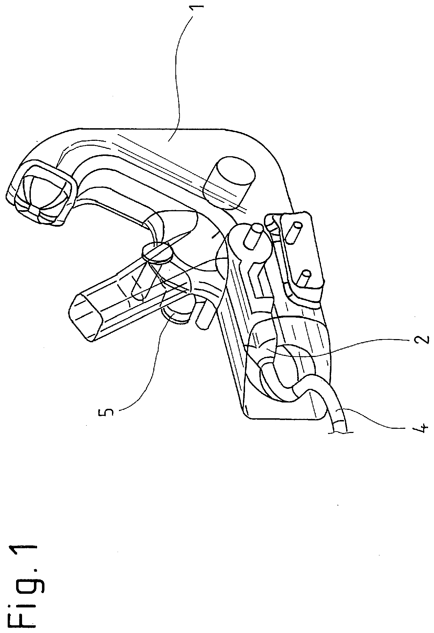

Figur 1 zeigt ein Ausfallende 1 für einen Fahrradrahmen. In dem Ausfallende 1 ist beispielsweise das Hinterrad des Fahrrades aufnehmbar.

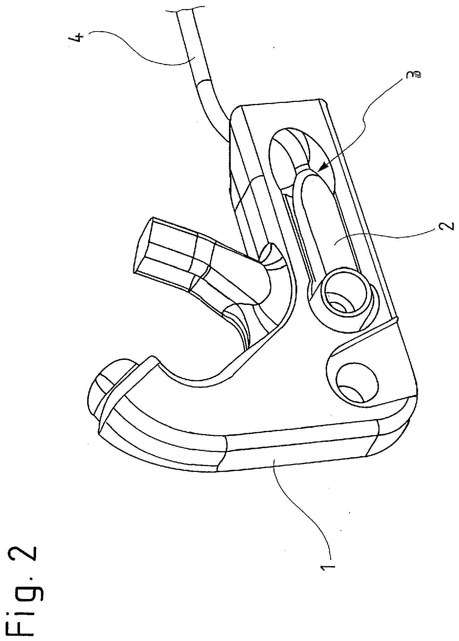

Erfindungsgemäß ist im Ausfallende 1 ein Geschwindigkeitssensor 2 aufgenommen. Das Ausfallende 1 hat dafür einen in Figur 2 gezeigten Bauraum 3. An den Geschwindigkeitssensor 2 ist ein Kabel 4 angeschlossen. Der Geschwindigkeitssensor 2 hat eine Ausgestaltung, die eine formschlüssige Einlage in den Bauraum 3 des Ausfallendes 1 ermöglicht. Der Geschwindigkeitssensor 2 hat an einer Seitenfläche eine Vertiefung, in die ein Vorsprung 6 des Materials des Ausfallendes 1 bevorsteht. So ist eine lagesichere Aufnahme des Geschwindigkeitssensors 2 erreicht.

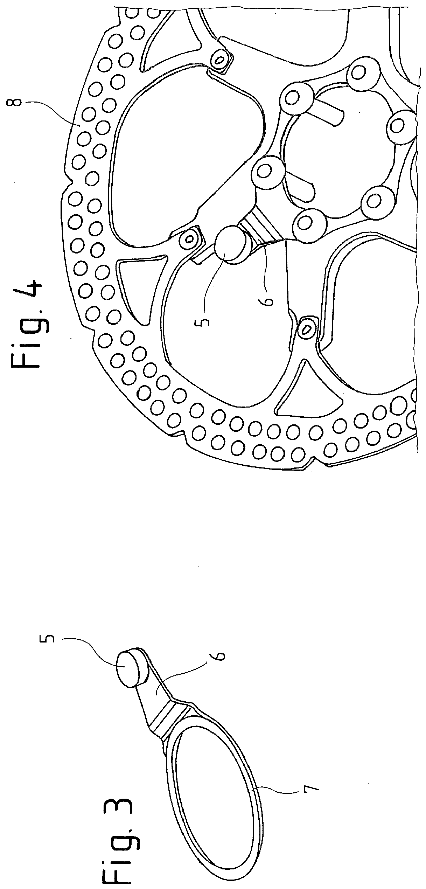

In Figur 1 ist auch das Auslöseelement 5 für den Geschwindigkeitssensor 2 dargestellt. Das Auslöseelement 5 ist beispielsweise ein Dauermagnet. Figuren 3 und 4 zeigen voneinander verschiedene Befestigungsmöglichkeiten des Auslöseelementes 5 an dem im Ausfallende 1 aufzunehmenden Rad. Nach Figur 3 ist das Auslöseelement 5 an einem Vorsprung 6 angeordnet, der an einem Ring 7 befestigt ist. Der Ring 7 kann auf die Achse des Rades aufgeschoben werden und dort drehfest befestigt werden. Alternativ ist, wie Figur 4 zeigt, das Auslöseelement 5 über einen Vorsprung 6 auf der Bremsscheibe 8 einer Scheibenbremse angeordnet. Auch die Bremsscheibe 8 wird drehfest an dem Rad befestigt, das im Ausfallende 1 aufgenommen ist.

Alle in der vorstehenden Beschreibung und in den Ansprüchen genannten Merkmale sind in einer beliebigen Auswahl mit den Merkmalen des unabhängigen Anspruchs kombinierbar. Die Offenbarung der Erfindung ist somit nicht auf die beschriebenen bzw. beanspruchten Merkmalskombinationen beschränkt, vielmehr sind alle im Rahmen der Erfindung sinnvollen Merkmalskombinationen als offenbart zu betrachten.

## Patentansprüche

1. Anordnung zur Aufnahme einer Geschwindigkeitsmesseinrichtung an einem Fahrrad,
**dadurch gekennzeichnet,**
**dass** zumindest ein Ausfallende (1) eines Rahmens des Fahrrades einen Bauraum (3) zur Aufnahme zumindest eines Geschwindigkeitssensors (2) aufweist und dass ein mit dem Geschwindigkeitssensor (2) in auslösender Wirkung korrespondierendes Auslöseelement (5) an einem Bauteil des in das Ausfallende (1) eingesetzten Rades angeordnet ist.

2. Anordnung nach Anspruch 1, **dadurch gekennzeichnet, dass** der Geschwindigkeitssensor (2) eine an den Bauraum des Ausfallendes (1) angepasste Außenkontur hat.

3. Anordnung nach Anspruch 1 oder 2, **dadurch gekennzeichnet, dass** zumindest ein zum Geschwindigkeitssensor (2) führendes Kabel (4) entlang einer Rahmenstrebe führbar ist.

4. Anordnung nach einem der vorhergehenden Ansprüche, **dadurch gekennzeichnet, dass** das Auslöseelement (5) an der Radachse befestigt ist.

5. Anordnung nach Anspruch 4, **dadurch gekennzeichnet, dass** zur Befestigung des Auslöseelementes (5) ein Ring (7) auf die Radachse aufgeschoben ist, wobei an dem Ring (7) ein Vorsprung (6) angeordnet ist und das Auslöseelement (5) an diesem Vorsprung (6) befestigt ist.

6. Anordnung nach einem der Ansprüche 1 bis 3, **dadurch gekennzeichnet, dass** Auslöseelement (5) an einer mit der Radachse drehfest verbundenen Bremsscheibe (8) einer Scheibenbremse angeordnet ist.
